# FASCICULE DE BREVET EUROPEEN

(11) **EP 3 393 901 B1**
(45) Date de publication et mention de la délivrance du brevet: **25.10.2023**
(21) Numéro de dépôt: 16829270.4
(22) Date de dépôt: 21.12.2016
(51) Int. Cl.: B63B 22/00, B63B 22/06, B63B 22/20, B63C 11/48, G01S 5/00

(54) **DISPOSITIF ET SYSTÈME DE DÉTECTION D'UN SIGNAL POUR LA LOCALISATION D'UNE SOURCE SOUS-MARINE**
VORRICHTUNG UND SYSTEM ZUR DETEKTION EINES SIGNALS ZUR ORTUNG EINER UNTERWASSERQUELLE
DEVICE AND SYSTEM FOR DETECTING A SIGNAL FOR LOCATING AN UNDERWATER SOURCE

(30) Priorité: 24.12.2015 FR 1563356
(43) Date de publication de la demande: 31.10.2018
(73) Titulaire: ECA Robotics, 83130 La Garde (FR)
(72) Inventeur: CLAVIER, Vincent, 83210 Sollies-Pont (FR)
(74) Mandataire: Santarelli
(86) Numéro de dépôt international: PCT/FR2016/053620
(87) Numéro de publication internationale: WO 2017/109416

(56) Documents cités:
- EP-A1- 1 217 390
- WO-A1-01/53850
- FR-A1- 3 003 649
- US-A- 4 258 568

## Description

La présente invention concerne des dispositifs et des systèmes de détection d'un signal recherché permettant la localisation d'une source sous-marine de ce signal.

Une balise subaquatique (appelée « *Underwater Locator Beacon* » ou ULB en anglais) est un émetteur acoustique fixé à un enregistreur de vol (aussi appelé « boîte noire ») ou au fuselage d'un aéronef. Les balises sont activées en cas d'immersion et conçues pour émettre une impulsion ultrasonique à une fréquence donnée, généralement de 37,5 kHz. Elles pourraient également émettre sur d'autres fréquences, par exemple entre 8 KHz et 10 KHz. Les impulsions sont émises à des intervalles d'une seconde pendant au moins trente jours (autonomie des sources d'énergie) afin de permettre leur repérage. Ce dernier est typiquement effectué par un hydrophone, c'est-à-dire un transducteur électroacoustique qui transforme des ondes acoustiques dans un liquide en signaux électriques, tracté par un navire.

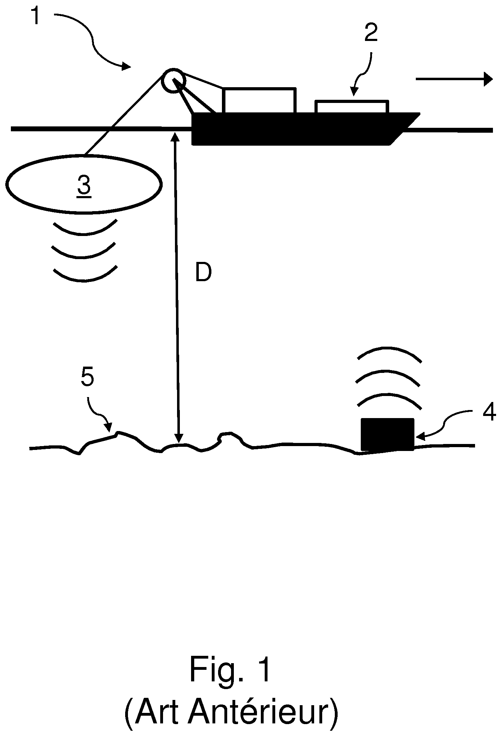

La figure 1 présente un système conventionnel 1 de recherche et de localisation d'émetteurs acoustiques. Le système 1 comprend un navire 2 et un hydrophone remorqué 3 (appelé « *Towed Pinger Locator* » en anglais) afin de détecter et localiser une balise 4 qui repose sur un fond sous-marin 5. L'hydrophone 3 permet, par exemple, une détection d'un signal acoustique jusqu'à une distance D d'environ 20 000 pieds.

Généralement, le navire 2 couvre une zone prédéterminée par quadrillage avec un tractage lent de l'hydrophone 3 (typiquement entre 1 et 5 milles nautiques par heure).

Si le site d'accident d'un aéronef dont la balise est recherchée est incertain, il faut employer plusieurs navires afin de détecter la balise 4 tant qu'elle émet un signal, avec des coûts financiers et humains importants. En outre, la recherche est limitée par les conditions météorologiques et des contraintes matérielles (réapprovisionnement, etc.). Il ne peut donc être exclu que la balise 4 s'arrête d'émettre un signal avant d'être retrouvée.

Dans certains cas, des moyens autonomes (c'est-à-dire non-tractés) peuvent être utilisés pour compléter et/ou remplacer un système conventionnel. Il est ainsi possible d'utiliser, par exemple, des sous-marins militaires, des robots sous-marins autonomes (aussi appelés « *Autonomous Underwater Véhiculé* » ou AUV en anglais) ou des véhicules sous-marins téléguidés (appelés « *Remotely Operated Vehicle* » ou ROV en anglais). Cela peut être lié, par exemple, à des conditions météorologiques difficiles. Cependant, l'utilisation de tels moyens présente d'autres inconvénients tels que, par exemple, un temps de repositionnement non négligeable, un temps d'autonomie limité et un temps de recharge important, la disponibilité d'opérateurs expérimentés, ou encore l'indisponibilité de ces moyens pour d'autres sollicitations.

D'autres dispositifs permettant la localisation d'un signal acoustique ayant une fréquence prédéterminée sont connus par exemple des documents FR 3 003 649 A1 ou WO 01/53850 A1.

Il apparaît ainsi que les moyens actuels reposent sur un balayement systématique d'une zone de recherche et sont mal adaptés à la détection et la localisation d'une balise subaquatique sur une zone de recherche étendue, dans un délai limité de quelques semaines et des conditions incertaines.

L'invention permet de résoudre au moins un des problèmes exposés précédemment.

Des modes de réalisation de l'invention concernent un dispositif de détection d'un signal acoustique recherché ayant une fréquence prédéterminée, permettant la localisation d'une source sous-marine du signal acoustique, le dispositif comprenant :
- un récepteur configuré pour détecter le signal acoustique recherché,
- un actionneur configuré pour permettre le déplacement d'au moins une partie du dispositif de détection vers une zone de signalisation d'un résultat de détection du signal recherché en réponse à une détection du signal acoustique recherché, et
- un émetteur configuré dans ladite au moins une partie du dispositif de détection pour signaler le résultat de détection du signal recherché.

Le dispositif peut être distribué, en grand nombre, rapidement et facilement, dans une zone de recherche étendue de telle sorte qu'un signal recherché, par exemple provenant d'une balise subaquatique, puisse être détecté par le récepteur, qui commande l'actionneur qui ensuite fait remonter au moins l'émetteur pour signaler le résultat de la détection. Ces dispositifs opèrent indépendamment les uns des autres pour détecter la source du signal.

Le dispositif est alors configuré pour détecter un signal prédéterminé et non un signal quelconque.

Dans un mode de réalisation, le dispositif comprend en outre un lest configuré pour faire descendre le dispositif de détection vers le fond et dans lequel l'actionneur est un moyen pour détacher le lest afin de permettre à ladite au moins une partie du dispositif de détection de remonter vers la surface.

Le dispositif comporte alors des moyens « passif » de descente et de remonté, de faible coûts.

Dans un mode de réalisation, le lest comprend une cavité pour recevoir et protéger l'émetteur lorsque ledit lest est fixé à ladite au moins une partie du dispositif de détection.

Dans un mode de réalisation, l'émetteur est un émetteur radio configuré pour émettre un signal radio.

Le signal radio peut être détecté à distance par un satellite par exemple ou une antenne montée sur un navire.

Dans un mode de réalisation, l'émetteur est configuré pour émettre le résultat de détection selon au moins une condition suivante :
- après la détection du signal recherché,
- après l'actionnement de l'actionneur,
- lorsque ladite au moins une partie du dispositif de détection est dans la zone de signalisation,
- après un délai prédéterminé, et
- lorsque ladite au moins une partie du dispositif de détection se trouve à proximité de la surface de l'eau.

L'émetteur peut alors être configuré selon les besoins et contraintes de la recherche.

Dans un mode de réalisation, la forme de ladite au moins une partie du dispositif de détection est conçue pour permettre la remontée de ladite au moins une partie du dispositif de détection par l'effet de poussée.

Dans un mode de réalisation, l'actionneur est configuré pour activer un propulseur.

Le dispositif peut alors remonter et/ou descendre grâce au propulseur.

Des modes de réalisation de l'invention concernent en outre un procédé de détection d'un signal acoustique recherché provenant d'une source sous-marine et de signalisation d'un résultat de détection permettant la localisation de la source, le procédé étant mis en oeuvre par un dispositif selon un mode de réalisation.Dans un mode de réalisation, le procédé comprend les étapes de :
- réception d'un résultat de détection du signal du récepteur,
- en réponse à la réception d'un résultat de détection du signal par le récepteur, commande de l'actionneur pour permettre le déplacement de ladite au moins une partie du dispositif de détection vers une zone de signalisation du résultat de détection du signal recherché, et
- signalisation, au moyen de l'émetteur, du résultat de détection du signal recherché.

Dans un mode de réalisation, le procédé comprend en outre une étape de détachement d'un lest de ladite au moins une partie du dispositif de détection, permettant le déplacement d'au moins l'émetteur vers la zone de signalisation.

Dans ce cas, seulement les résultats positifs de détection sont signalés, afin d'éviter une surcharge d'informations et permettre une localisation plus rapide de la source du signal.

Des modes de réalisation de l'invention concernent en outre un système de distribution de plusieurs dispositifs de détection selon un mode de réalisation. Le système comprend un véhicule de distribution et un distributeur de dispositifs de détection comprenant une pluralité de dispositifs de détection.

Un tel système permet une distribution rapide des dispositifs de détection dans une zone de recherche étendue.

Dans un mode de réalisation, le distributeur est configuré pour distribuer les dispositifs de détection selon une topologie prédéterminée.

Dans un mode de réalisation, le système comprend en outre un moyen de détection d'un résultat de détection provenant d'un dispositif de détection.

Des modes de réalisation de l'invention concernent en outre un procédé de distribution de plusieurs dispositifs de détection selon un mode de réalisation et de détection d'un résultat de détection provenant d'un dispositif de détection afin de localiser la source du signal recherché. Le procédé de distribution et de détection comprend la mise en oeuvre d'un système selon un mode de réalisation et comprend les étapes de :
- distribution des dispositifs de détection dans une zone de recherche selon une topologie prédéterminée, et
- détection d'au moins un résultat positif de détection du signal.

Dans un mode de réalisation, le procédé comprend en outre une étape de détermination de la topologie prédéterminée de distribution des dispositifs de détection, et le distributeur est configuré pour distribuer les dispositifs de détection selon la topologie prédéterminée.

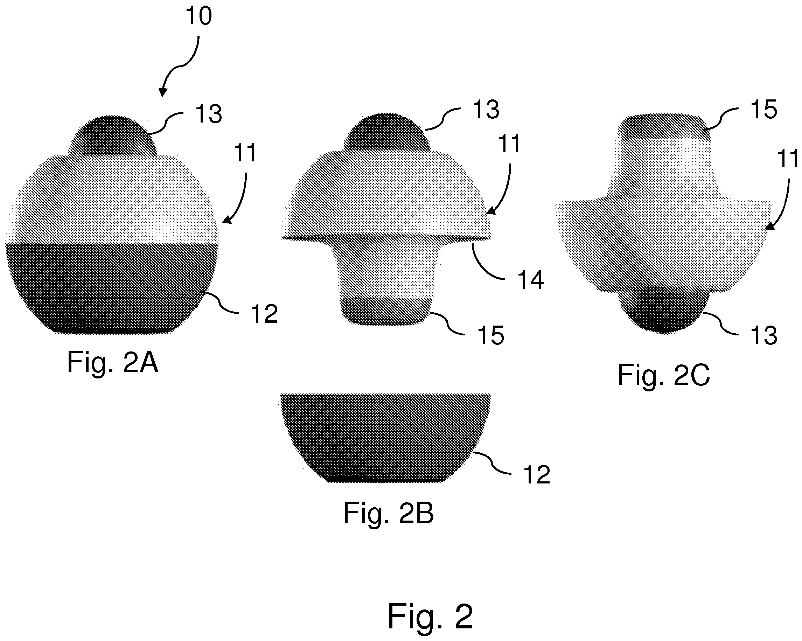

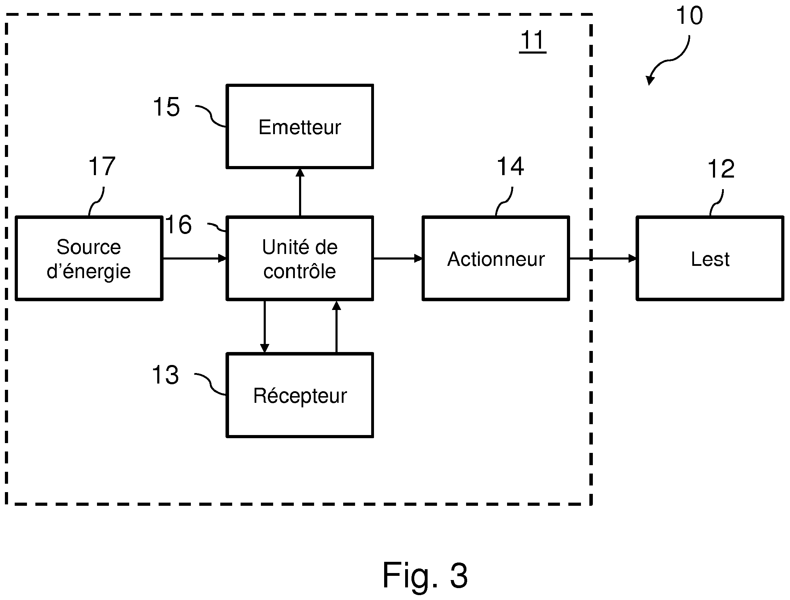

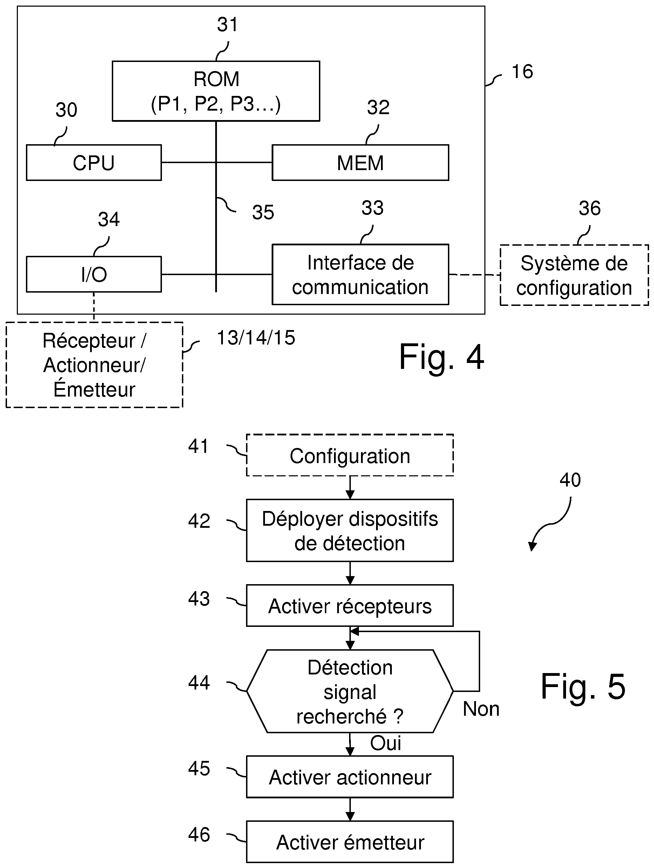

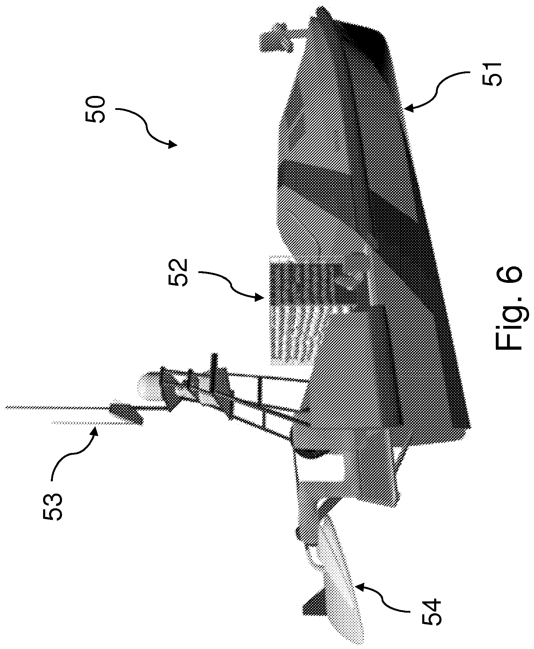

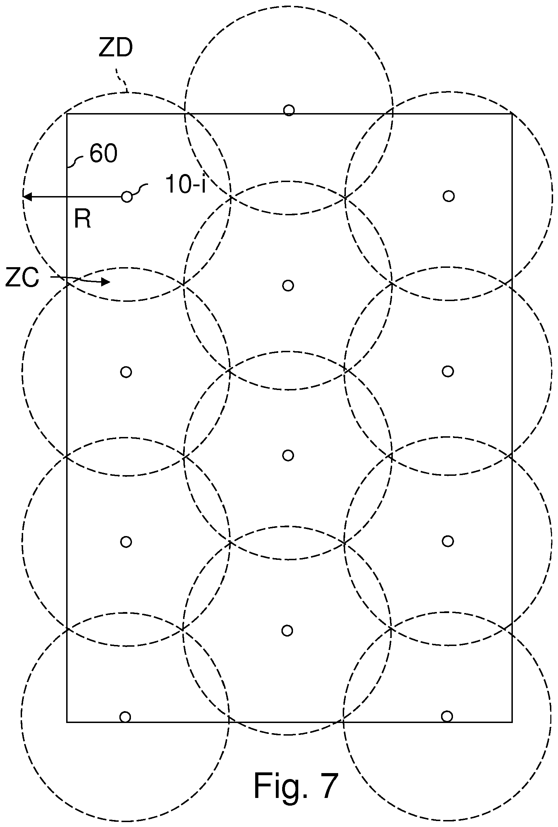

D'autres avantages, buts et caractéristiques de la présente invention ressortent de la description détaillée qui suit, faite à titre d'exemple non limitatif, au regard des dessins annexés dans lesquels :
- **la** **figure 1** présente schématiquement un système conventionnel de recherche d'un signal provenant d'une source sous-marine ;
- **la** **figure 2****,** comprenant les **figures 2A, 2B, 2C****,** présente un dispositif de détection selon un mode de réalisation dans différents états de détection et de localisation ;
- **la** **figure 3** présente schématiquement la structure fonctionnelle d'un dispositif de détection selon un mode de réalisation ;
- **la** **figure 4** présente schématiquement un exemple de la structure de l'unité de contrôle du dispositif illustré sur la figure 3 ;
- **la** **figure 5** est un organigramme de certaines étapes d'un procédé de détection d'un signal recherché provenant d'une source sous-marine et de signalisation du résultat de détection permettant la localisation de la source ;
- **la** **figure 6** présente un exemple de système de distribution de dispositifs de détection selon un mode de réalisation ; et
- **la** **figure 7** illustre une zone de recherche après que des dispositifs de détection selon un mode de réalisation aient été déployés.

D'une manière générale, le but de l'invention est de permettre une distribution rapide de détecteurs d'un signal recherché dans une zone de recherche étendue de telle sorte qu'une source acoustique située à chaque point de la zone puisse être détectée par un détecteur. Ces détecteurs opèrent indépendamment les uns des autres pour détecter un signal et transmettre un résultat de détection du signal. Chaque détecteur contribue ainsi à la localisation d'une source du signal. Lorsqu'un ou plusieurs détecteurs ont détectés la présence d'une source du signal, une recherche plus précise peut être effectuée dans une zone restreinte à celle située à proximité de ces détecteurs.

La **figure 2****,** comprenant les **figures 2A, 2B, 2C****,** présente un dispositif de détection 10 (ou détecteur) selon un mode de réalisation dans un état de détection du signal, un état suivant la détection du signal et un état d'émission d'un signal de résultat, respectivement.

Selon le mode de réalisation illustré, le dispositif de détection 10 comprend une partie « active » 11 et une partie « inactive » ou lest 12. La partie active 11 comprend ici un récepteur 13 d'un signal recherché, un actionneur 14 et un émetteur 15 d'un résultat de détection. Le dispositif de détection 10 comprend en outre une unité de contrôle et une source d'énergie, non illustrés dans les **figures 2****.** Il est observé que le récepteur 13 et l'actionneur 14 pourraient, en particulier, être mis en oeuvre dans le lest 12.

Le dispositif de détection 10 ou, plus généralement une pluralité des dispositifs de détection tels que le dispositif de détection10, sont distribués dans une zone de recherche par des moyens appropriés (hélicoptère, navire, etc.) qui sont décrits plus en détail en référence à la **figure 6****.**

Lorsqu'un dispositif de détection est distribué, typiquement lâché depuis un engin, le lest 12 force la descente du dispositif de détection 10 vers le fond sous-marin.

Le récepteur 13 est par exemple un hydrophone configuré pour détecter un signal acoustique émis par une balise avec une fréquence spécifique. La configuration peut être prédéterminée (par exemple lors de la fabrication ou la commercialisation du dispositif de détection) ou déterminée ultérieurement, par exemple en vue de son utilisation, en fonction de la source recherchée.

L'actionneur 14 permet au lest 12 d'être détaché du dispositif de détection 10 afin de permettre la remontée de la partie active 11 vers la surface. La zone vers laquelle remonte la partie active 11 est la zone dans laquelle le dispositif de détection 10 a été lâché, modifiée selon les courants marins et d'autres facteurs ayant influencés la descente et/ou la remontée du dispositif de détection 10 ou de sa partie active 11, respectivement. La zone vers laquelle remonte la partie active 11 est ici appelée zone de signalisation.

L'émetteur 15 émet alors un signal de résultat qui peut être détecté.

Le signal de résultat peut être un simple signal visuel, par exemple une fusée éclairante, ou un signal électromagnétique comprenant alors, de préférence, une information selon laquelle le signal a été détecté et une donnée d'identification du dispositif 10 dont la partie active émet. Alternativement ou de façon complémentaire, ces données peuvent comprendre des données de localisation.

Les conditions de détection d'un signal recherché, d'actionnement de l'actionneur et d'émission du signal de résultat peuvent notamment varier en fonction de conditions de la zone de recherche, du temps disponible, de contraintes matérielles et météorologiques, de besoins d'analyse et de niveaux de fiabilité requis.

A titre d'illustration, le récepteur 13 peut être activé lorsque le dispositif de détection 10 est lâché afin de commencer la détection d'un signal recherché dès la descente du dispositif de détection 10, lorsque ce dernier est immobile (i.e. lorsqu'il a atteint le fond sous-marin) ou après un délai prédéterminé après qu'il ait été lâché ou qu'il ait atteint le fond sous-marin.

De même, l'actionneur 14 peut être actionné et provoquer la remonté de la partie active 11 du dispositif de détection 10 seulement si le résultat de la détection est positif (le signal prédéterminé a bien été détecté) ou après un certain temps, par exemple indépendamment du résultat de la détection.

L'actionneur 14 peut être un simple électro-aimant qui relâche le lest 12, un verrou électromagnétique ou tout autre moyen permettant de séparer la partie active 11 du lest 12. La partie active 11 du dispositif de localisation 10 peut remonter vers la surface par un simple effet de poussée.

Selon un mode de réalisation particulier, la partie active 11 se retourne après qu'elle ait été dissociée du lest 12 à l'aide, par exemple de sa forme et de la répartition des masses dans la partie active 11. Toujours selon un mode de réalisation particulier, l'émetteur 15 est logé dans un creux du lest 12 pour être protégé et se retrouve vers le haut lorsque la partie active 11 est dissociée du lest 12, ce qui facilite l'émission d'un signal de résultat.

Il est observé ici que l'émission d'un signal de résultat par l'émetteur 15 peut être effectuée tout de suite après la détection d'un signal recherché par le récepteur 13, après l'actionnement de l'actionneur 14, après un temps prédéterminé suivant la détection d'un signal recherché ou l'actionnement de l'actionneur 14, ou lorsqu'une zone d'émission est atteinte (par exemple, une centaine de mètres sous la surface ou la surface elle-même).

Dans un mode de réalisation particulier, le dispositif de détection 10 est configuré pour que la partie active 11 ne remonte à la surface que si le signal recherché a été effectivement détecté, afin de simplifier le traitement de données de localisation.

Selon un autre mode de réalisation, le dispositif de détection 10 est configuré pour que la partie active 11 remonte à la surface même si le signal recherché n'a pas été détecté afin d'émettre un signal qui indique l'absence de détection du signal recherché dans la zone considérée. Un tel mode de réalisation permet de vérifier le bon fonctionnement du système et, ainsi, d'écarter des zones de recherche d'une source d'un signal recherché, par exemple en étant certain qu'un dispositif de localisation ayant détecté un signal recherché n'a pas été bloqué et se trouve alors incapable de remonter vers la surface et émettre un signal de résultat.

Le dispositif de détection 10 doit être résistant à l'immersion, sa résistance devant être déterminée selon la topographie des lieux dans lesquels des recherches doivent être effectuées. Selon des modes de réalisation, le dispositif de détection 10 est résistant à l'immersion par grands fonds. Il est en outre capable de descendre au fond par gravité ou par propulsion, de remonter à la surface par poussée ou par propulsion et d'émettre un signal pendant une durée suffisante, par exemple pendant quelques heures, quelques jours ou quelques semaines.

Lorsque le récepteur 13 du dispositif de détection 10 est un hydrophone, il doit être sensible à la fréquence cherchée, par exemple 33.5 KHz pour les balises subaquatiques actuelles. Il peut également être configuré ou configurable pour permettre la détection de fréquences futures, notamment des fréquences à l'étude comme 8.8 KHz et 9.5 KHz, généralement détectables par un hydrophone de 10 KHz. Sa sensibilité permet en outre, de préférence, d'effectuer des détections à des distances suffisantes pour permettre une distribution efficace des dispositifs de détection, par exemple une détection dans un rayon de 1,2 milles nautiques pour une fréquence de 33.5 KHz et 5 miles nautiques pour une fréquence de 8.8 KHz.

Avantageusement, les dispositifs de détection sont relativement peu coûteux par rapport aux autres moyens connus (tel que le déploiement d'un hydrophone tracté, d'un sous-marin militaire, de robots sous-marins autonomes ou de véhicules sous-marins téléguidés) et peuvent être considérés comme des « consommables » non-récupérés dans la recherche d'une balise, particulièrement pour les zones de recherche étendues et très profondes. En outre, ils peuvent être déployés relativement rapidement (il suffit de les lâcher selon une cartographie permettant de couvrir une zone identifiée) et dans des conditions métrologiques dégradées.

Dans certains cas, par exemple dans des modes « test » (du bon fonctionnement du système) ou « entraînement » (à la manipulation des dispositifs de détection), les parties actives 11, voire le lest 12, peuvent être récupérés. Il peut également exister des versions particulières des dispositifs de détection pour l'entraînement, configurés pour faciliter leur récupération.

La **figure 3** présente schématiquement l'architecture fonctionnelle du dispositif de détection 10, avec sa partie active 11 et le lest 12.

Comme illustré, la partie active 11 comprend ici le récepteur 13, l'actionneur 14, l'émetteur 15, l'unité de contrôle 16 et une source d'énergie 17.

La source d'énergie 17 fournit ici un courant électrique à l'unité de contrôle 16. Cette dernière contrôle notamment le récepteur 13, l'émetteur 15 et l'actionneur 14. Alternativement, la source d'énergie 17 peut fournir directement un courant électrique au récepteur 13, à l'actionneur 14 et à l'émetteur 15.

Lorsque le récepteur 13 doit être utilisé, il est activé par l'unité de contrôle 16 qui lui fournit le courant électrique nécessaire. Le récepteur 13 transmet à l'unité de contrôle 16 les signaux reçus afin que cette dernière puisse déterminer si un signal recherché a été reçu. A ces fins, l'unité de contrôle comprend des circuits standard, par exemple des circuits d'amplification et de filtrage pour traiter les signaux reçus et un circuit de comparaison pour comparer un signal reçu (amplifié et filtré) avec un signal recherché.

Après un temps prédéterminé et/ou lorsqu'un signal recherché est détecté, l'unité de contrôle 16 actionne l'actionneur 14 et active l'émetteur 15 (et, le cas échéant, leur fournit le courant électrique nécessaire) afin de permettre à la partie active 11 de remonter vers la surface et émettre un signal de résultat.

La **figure** 4 présente schématiquement un exemple de la structure de l'unité de contrôle 16 qui comprend ici un processeur 30 (aussi appelé « *Central Processing Unit* » ou CPU en anglais), une mémoire ROM 31 (aussi appelée « *Read Only Memory* » en anglais), une mémoire RAM 32 (aussi appelée « *Random Access Memory* » en anglais), une interface de communication 33 et une interface d'entrée/sortie 34 (aussi appelée « *Input*/*Output interface* » ou I/O en anglais), le tout étant interconnecté par un bus informatique 35.

La mémoire ROM 31 stocke un ou plusieurs programmes (P1, P2, P3...) pour la mise en oeuvre du procédé par le dispositif de détection 10. L'interface de communication 33 communique avec un système de configuration 36 qui permet la configuration de l'unité de traitement 16, par exemple au moment de la fabrication du dispositif de détection 10 ou avant son déploiement. L'entrée/sortie 34 permet des communications avec le récepteur 13, l'actionneur 14 et l'émetteur 15.

La **figure** 5 est un organigramme de certaines étapes d'un procédé 40 de détection d'un signal recherché provenant d'une source sous-marine et de signalisation du résultat de détection permettant la localisation de la source.

Le procédé 40 comprend les étapes 41 à 46. Les étapes 41 à 43 visent un ensemble de dispositifs de détection et les étapes 44 à 46 sont mises en oeuvre dans chaque dispositif de détection.

A l'étape 41, les dispositifs de détection sont configurés selon divers paramètres tels que les besoins de la recherche - le signal recherché, le délai avant la détection et/ou l'émission.

A l'étape 42, les dispositifs sont déployés, comme il sera décrit plus en détail en référence aux **figures 6** **et** **7****.** A l'étape 43, les récepteurs (13) de chaque dispositif de détection sont activés.

A l'étape 44, il est déterminé, dans chaque dispositif de détection, si le signal recherché a été détecté. Dans un mode de réalisation particulier, si la réponse est négative, le procédé boucle sur lui-même jusqu'à une réponse positive (ou jusqu'à ce qu'il soit arrêté). Si la réponse est positive, le procédé avance à l'étape 45 dans laquelle l'actionneur 14 est actionné, permettant au dispositif de détection, ou à au moins une partie de celui-ci, de remonter vers la surface. A l'étape 46, l'émetteur 16 est actionné, permettant à un signal de résultat de détection d'être émis.

Il doit être compris qu'il existe de nombreuses alternatives au procédé décrit ici. Elles peuvent notamment avoir pour objet d'actionner l'actionneur après un délai prédéterminé, sans attendre un résultat positif de détection.

La **figure 6** présente un système de distribution 20 de dispositifs de détection tels que le dispositif de détection 10, selon un mode de réalisation particulier.

Comme illustré, le système 20 comprend un navire 21 et un distributeur 22 contenant une pluralité de dispositifs de détection (similaires ici au dispositif de détection 10). Optionnellement, le système 20 comprend en outre une antenne 23 pour détecter un signal de résultat et/ou un hydrophone remorqué 24 pour la recherche dans une zone peu profonde et éventuellement dans une zone restreinte suivant la détection d'un résultat positif par un ou plusieurs dispositifs de détection.

Le navire 21 peut être un navire avec ou sans pilote embarqué (appelé « *Unmanned Surface Véhiculé* » ou USV en anglais), permettant la distribution sur une large étendue. Le distributeur 22 permet un cadencement de référence utilisant, par exemple, un système mondial de positionnement (appelé « *Global Positionning System* » ou GPS en anglais) et une interface de planification de mission pour tenir compte de paramètres tels que le nombre de navires déployés, la surface et la nature de la zone de recherche et les résultats envoyés par les dispositifs de détection.

Un navire de commandement servant de centre d'opérations comprenant des moyens de réapprovisionnement des navires 21 en dispositifs de détection et permettant notamment la planification de zones de recherche et le traitement des données obtenues de dispositifs de détection peut être situé dans les parages.

Dans un mode de réalisation, les dispositifs de détection sont distribués manuellement par un opérateur depuis un véhicule (par exemple un bateau, un hélicoptère ou un sous-marin) avec un cadencement régulier selon la vitesse du véhicule, par exemple toutes les cinq minutes afin d'effectuer un quadrillage de la zone de recherche.

Le ou les dispositifs de détection remontés à la surface transmettent des informations de détection et de localisation en utilisant, par exemple les services de prestataires de communication satellitaires jusqu'à une centre de coordination de la recherche.

La **figure 7** illustre une zone de recherche 60 après que des dispositifs de détection tels que le dispositif de détection 10 aient été déployés. Il s'agit d'une représentation théorique dans la mesure où les dispositifs de détection sont soumis à des contraintes telles que des courants et qu'il peut s'avérer difficile de mettre à l'eau ces dispositifs de détection en anticipant leur déviation au cours de leur descente.

Comme illustré, un nombre N de dispositifs de détection référencés 10-i (i étant un indice de 1 à N), similaires au dispositif de détection 10, sont déployés dans la zone de recherche 60. Chaque dispositifs de détection 10-i a un rayon de détection R déterminé selon ses caractéristiques et sa configuration, formant une zone de détection ZD autour. Des zones de chevauchement ZC entre au moins deux zones de détection ZD peuvent apparaitre en fonction notamment du nombre de dispositifs de détection disponibles, du taux de fiabilité souhaité et des dérives entre les points de déploiement des dispositifs et les points où ils sont posés au sol.

Il est observé ici que le rayon de détection R peut varier d'un dispositif de détection à un autre.

Par exemple, la cartographie de la recherche peut prévoir que chaque point de la zone de recherche soit couvert par aux moins deux dispositifs de détection pour empêcher des fausses réponses négatives si un dispositif de détection ne fonctionne pas correctement ou si un point n'est pas couvert par un dispositif de détection à cause de dérives liées, par exemple, au courant.

D'autres modes de réalisation et de mises en oeuvre du dispositif et du système selon l'invention peuvent être envisagés.

En particulier, le dispositif peut être configuré pour détecter et signaler un « signal » non-acoustique, par exemple un produit chimique, une radiation, un passage de sous-marin ou de bateau. Plus généralement, toutes sortes de « signaux », « données » ou « évènements » prédéterminés peuvent être détectés et signalés.

Dans des modes de réalisation particuliers, les dispositifs sont distribués avant la réalisation d'un événement ou avant qu'une source à détecter ne soit présente, par exemple autour d'un périmètre à protéger et restent en veille jusqu'à la détection d'un signal, d'une donnée ou d'un événement (ou jusqu'à l'épuisement de batteries). A titre d'illustration, de tels dispositifs peuvent être distribués en mer pour détecter la présence de courants ayant certaines caractéristiques prédéterminées (températures, pollution, etc.).

Dans un mode de réalisation, des dispositifs avec différentes sensibilités de détection du signal recherché sont déployés. Par exemple, dans un premier temps, des dispositifs avec une sensibilité de dix milles nautiques sont distribués dans une zone très étendu. Après une première détection du signal recherché, des dispositifs avec une sensibilité d'un mille nautique sont distribués dans une zone plus restreinte déterminée à partir des résultats obtenus à l'aide des premiers dispositifs de détection. Ce mécanisme peut être répété avec d'autres niveaux de sensibilité.

Dans un mode de réalisation, le dispositif de détection 10 initialise la détection par le récepteur 13 dès qu'il est déployé, sans attendre d'être immobile. Dans ce cas, si le signal est détecté durant la descente vers le fond, le lest 12 peut être immédiatement relâché afin de permettre au dispositif de détection 10 de remonter et émettre un signal de résultat. Le signal recherché sera alors détecté plus rapidement et il y aura moins de risque que le dispositif de détection soit bloqué sous l'eau, ce qui empêcherait une signalisation du signal détecté (créant « une fausse réponse négative ») ou qu'il dérive.

Dans un mode de réalisation, les dispositifs de détection sont stockés dans ou avec une balise subaquatique ou dans le fuselage d'un aéronef, avant tout accident. Ils pourraient alors remonter à la surface de l'eau une fois libérés. Pour cela, ils devraient être résistants aux chocs.

Il sera compris par l'homme du métier que le dispositif et le système décrits ne sont pas applicables seulement à la recherche d'un signal acoustique, notamment en provenance d'une balise émetteur. Au contraire, toute sorte de signal recherché peut être détecté et signalé, par exemple, une détection de radiation ou la présence d'un composant chimique.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en oeuvre par la personne compétente dans le domaine de l'invention à la lecture de la présente description et des figures annexées.

Dans les revendications, les termes « comprendre » ou « comporter » n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Dispositif de détection (10) d'un signal acoustique recherché ayant une fréquence prédéterminée, permettant la localisation d'une source sous-marine du signal acoustique, le dispositif comprenant :
- un récepteur (13) configuré pour détecter le signal acoustique recherché,
- un actionneur (14) configuré pour permettre le déplacement d'au moins une partie du dispositif de détection (10) vers une zone de signalisation d'un résultat de détection du signal recherché en réponse à une détection du signal acoustique recherché, et
- un émetteur (15) configuré dans ladite au moins une partie du dispositif de détection (10) pour signaler le résultat de détection du signal recherché.

2. Dispositif selon la revendication 1, comprenant en outre un lest (12) configuré pour faire descendre le dispositif de détection (10) vers le fond et dans lequel l'actionneur (14) est un moyen pour détacher le lest afin de permettre à ladite au moins une partie du dispositif de détection de remonter vers la surface.

3. Dispositif selon la revendication 2, dans lequel le lest (12) comprend une cavité pour recevoir et protéger l'émetteur (15) lorsque ledit lest est fixé à ladite au moins une partie du dispositif de détection (10) .

4. Dispositif selon l'une des revendications 1 à 3, dans lequel l'émetteur (15) est un émetteur radio configuré pour émettre un signal radio.

5. Dispositif selon l'une des revendications 1 à 4, dans lequel l'émetteur (15) est configuré pour émettre le résultat de détection selon au moins une condition suivante :
- après la détection du signal recherché,
- après l'actionnement de l'actionneur (14),
- lorsque ladite au moins une partie du dispositif de détection est dans la zone de signalisation,
- après un délai prédéterminé, et
- lorsque ladite au moins une partie du dispositif de détection se trouve à proximité de la surface de l'eau.

6. Dispositif selon l'une des revendications 1 à 5, dans lequel la forme de ladite au moins une partie du dispositif de détection est conçue pour permettre la remontée de ladite au moins une partie du dispositif de détection par l'effet de poussée.

7. Dispositif selon la revendication 1, dans lequel l'actionneur (14) est configuré pour activer un propulseur.

8. Procédé de détection d'un signal acoustique recherché provenant d'une source sous-marine et de signalisation d'un résultat de détection permettant la localisation de la source, le procédé étant mis en oeuvre par un dispositif selon l'une des revendications 1 à 7 et comprenant les étapes de :
- réception (43) d'un résultat de détection du signal du récepteur (13),
- en réponse à la réception (43) d'un résultat de détection du signal par le récepteur (13), commande de l'actionneur (14) pour permettre le déplacement de ladite au moins une partie du dispositif de détection vers une zone de signalisation du résultat de détection du signal recherché, et
- signalisation (46), au moyen de l'émetteur (15), du résultat de détection du signal recherché.

9. Procédé selon la revendication 8, comprenant en outre une étape de détachement d'un lest (12) de ladite au moins une partie du dispositif de détection, permettant le déplacement d'au moins l'émetteur (15) vers la zone de signalisation.

10. Système de distribution (20) de plusieurs dispositifs de détection (10) selon l'une des revendications 1 à 7, comprenant :
un véhicule (21) de distribution, et
un distributeur (22) de dispositifs de détection comprenant une pluralité de dispositifs de détection.

11. Système selon la revendication 10, dans lequel le distributeur est configuré pour distribuer les dispositifs de détection selon une topologie prédéterminée.

12. Système selon l'une des revendications 10 ou 11, comprenant en outre un moyen de détection d'un résultat de détection provenant d'un dispositif de détection (10).

13. Procédé de distribution de plusieurs dispositifs de détection (10) selon l'une des revendications 1 à 7 et de détection d'un résultat de détection provenant d'un dispositif de détection afin de localiser la source du signal recherché, le procédé comprenant la mise en oeuvre d'un système selon l'une des revendications 10 à 12 et comprenant les étapes de :
- distribution des dispositifs de détection (10) dans une zone de recherche selon une topologie prédéterminée, et
- détection d'au moins un résultat positif de détection du signal.

14. Procédé selon la revendication 13 comprenant en outre une étape de détermination d'une topologie de distribution des dispositifs de détection, le distributeur étant configuré pour distribuer les dispositifs de détection selon la topologie prédéterminée.

## Patentansprüche

1. Vorrichtung (10) zum Erfassen eines gesuchten akustischen Signals mit einer vorbestimmten Frequenz, die die Lokalisierung einer Unterwasserquelle des akustischen Signals ermöglicht, wobei die Vorrichtung enthält:
- einen Empfänger (13), der dazu ausgelegt ist, das gesuchte akustische Signal zu erfassen,
- einen Aktuator (14), der dazu ausgelegt ist, die Bewegung zumindest eines Teils der Erfassungsvorrichtung (10) zu einem Signalisierungsbereich zu ermöglichen, in dem ein Ergebnis der Erfassung des gesuchten Signals als Reaktion auf eine Erfassung des gesuchten akustischen Signals signalisiert wird, und
- einen Sender (15), der in dem zumindest einen Teil der Erfassungsvorrichtung (10) dazu ausgelegt ist, das Ergebnis der Erfassung des gesuchten Signals zu signalisieren.

2. Vorrichtung nach Anspruch 1,
ferner umfassend einen Ballast (12), der dazu ausgelegt ist, die Erfassungsvorrichtung (10) auf den Grund sinken zu lassen, wobei der Aktuator (14) eine Einrichtung zum Lösen des Ballasts ist, um es dem zumindest einen Teil der Erfassungsvorrichtung zu ermöglichen, wieder an die Oberfläche zu steigen.

3. Vorrichtung nach Anspruch 2,
wobei der Ballast (12) einen Hohlraum zur Aufnahme und zum Schutz des Senders (15) umfasst, wenn der Ballast an dem zumindest einen Teil der Erfassungsvorrichtung (10) befestigt ist.

4. Vorrichtung nach einem der Ansprüche 1 bis 3,
wobei der Sender (15) ein Funksender ist, der dazu ausgelegt ist, ein Funksignal auszusenden.

5. Vorrichtung nach einem der Ansprüche 1 bis 4,
wobei der Sender (15) dazu ausgelegt ist, das Erfassungsergebnis gemäß zumindest einer der folgenden Bedingungen auszusenden:
- nach dem Erfassen des gesuchten Signals,
- nach der Betätigung des Aktuators (14),
- wenn sich der zumindest eine Teil der Erfassungsvorrichtung im Signalisierungsbereich befindet,
- nach einer vorbestimmten Zeitspanne und
- wenn sich der zumindest eine Teil der Erfassungsvorrichtung in der Nähe der Wasseroberfläche befindet.

6. Vorrichtung nach einem der Ansprüche 1 bis 5,
wobei die Form des zumindest einen Teils der Erfassungsvorrichtung so gestaltet ist, dass der zumindest eine Teil der Erfassungsvorrichtung durch die Auftriebswirkung wieder nach oben steigen kann.

7. Vorrichtung nach Anspruch 1,
wobei der Aktuator (14) dazu ausgelegt ist, einen Antrieb zu aktivieren.

8. Verfahren zum Erfassen eines gesuchten akustischen Signals von einer Unterwasserquelle und zum Signalisieren eines Erfassungsergebnisses, das die Lokalisierung der Quelle ermöglicht, wobei das Verfahren mittels einer Vorrichtung nach einem der Ansprüche 1 bis 7 durchgeführt wird und die folgenden Schritte umfasst:
- Empfangen (43) eines Signalerfassungsergebnisses durch den Empfänger (13),
- als Reaktion auf den Empfang (43) eines Signalerfassungsergebnisses durch den Empfänger (13), Ansteuern des Aktuators (14), um die Bewegung des zumindest einen Teils der Erfassungsvorrichtung zu einem Signalisierungsbereich zu ermöglichen, in dem das Ergebnis der Erfassung des gesuchten Signals signalisiert wird, und
- Signalisieren (46) des Ergebnisses der Erfassung des gesuchten Signals mittels des Senders (15).

9. Verfahren nach Anspruch 8, ferner umfassend einen Schritt des Lösens eines Ballasts (12) von dem zumindest einen Teil der Erfassungsvorrichtung, wodurch die Bewegung zumindest des Senders (15) in den Signalisierungsbereich ermöglicht wird.

10. Verteilungssystem (20) für mehrere Erfassungsvorrichtungen (10) nach einem der Ansprüche 1 bis 7, enthaltend:
ein Verteilerfahrzeug (21) und
einen Verteiler (22) für Erfassungsvorrichtungen, der eine Vielzahl von Erfassungsvorrichtungen enthält.

11. System nach Anspruch 10,
wobei der Verteiler dazu ausgelegt ist, die Erfassungsvorrichtungen gemäß einer vorbestimmten Topologie zu verteilen.

12. System nach einem der Ansprüche 10 oder 11, ferner enthaltend eine Einrichtung zum Erfassen eines Erfassungsergebnisses von einer Erfassungsvorrichtung (10).

13. Verfahren zum Verteilen mehrerer Erfassungsvorrichtungen (10) nach einem der Ansprüche 1 bis 7 und zum Erfassen eines Erfassungsergebnisses von einer Erfassungsvorrichtung, um die Quelle des gesuchten Signals zu lokalisieren, wobei das Verfahren das Einsetzen eines Systems nach einem der Ansprüche 10 bis 12 sowie die folgenden Schritte umfasst:
- Verteilen der Erfassungsvorrichtungen (10) in einem Suchbereich gemäß einer vorbestimmten Topologie, und
- Erfassen zumindest eines positiven Signalerfassungsergebnisses.

14. Verfahren nach Anspruch 13, ferner umfassend einen Schritt des Bestimmens einer Topologie für die Verteilung der Erfassungsvorrichtungen, wobei der Verteiler dazu ausgelegt ist, die Erfassungsvorrichtungen gemäß der vorbestimmten Topologie zu verteilen.

## Claims

1. Device (10) for detecting an acoustic signal of interest with a predetermined frequency, making it possible to locate an underwater source of the acoustic signal, the device comprising:
- a receiver (13) configured to detect the acoustic signal of interest,
- an actuator (14) configured to allow at least one part of the detection device (10) to move to a zone for signalling a result of detection of the signal of interest in response to detecting the acoustic signal of interest, and
- an emitter (15) configured in the at least one part of the detection device (10) for signalling the result of detection of the signal of interest.

2. Device according to claim 1, also comprising ballast (12) configured to make the detection device (10) descend to the sea bed and in which the actuator (14) is a means for detaching the ballast in order to allow said at least one part of the detection device to ascend to the surface.

3. Device according to claim 2, in which the ballast (12) comprises a cavity to receive and protect the emitter (15) when the ballast is attached to the least one part of the detection device.

4. Device according to one of claims 1 to 3, in which the emitter (15) is a radio emitter configured to emit a radio signal.

5. Device according to one of claims 1 to 4, in which the emitter (15) is configured to emit the detection result according to at least one of the following conditions:
- after the detection of the signal of interest,
- after the actuation of the actuator (14),
- when said at least one part of the detection device is in the signalling zone,
- after a predetermined period, and
- when said at least one part of the detection device is close to the surface of the water.

6. Device according to one of claims 1 to 5, in which the shape of said at least one part of the detection device is designed to allow said at least one part of the detection device to ascend due to the buoyancy effect.

7. Device according to claim 1, in which the actuator (14) is configured to activate a propulsion means.

8. Method for detecting an acoustic signal of interest originating from an underwater source and signalling a detection result making it possible to locate the source, the method being implemented by a device according to one of claims 1 to 7 and comprising the steps of:
- receiving (43) a result of detection of the signal from the receiver (13),
- in response to receiving (43) a result of detection of the signal from the receiver (13), controlling the actuator (14) to allow said at least one part of the detection device to move to a zone for signalling the result of detection of the signal of interest, and
- signalling (46), by means of the emitter (15), of the result of detection of the signal of interest.

9. Method according to claim 8, also comprising a step of detaching ballast (12) from said at least one part of the detection device, allowing the at least one emitter (15) to move to the signalling zone.

10. System (20) for distributing several detection devices (10) according to one of claims 1 to 7, comprising:
a distribution vehicle (21), and
a distributor (22) of detection devices, comprising a plurality of detection devices.

11. System according to claim 10, in which the distributor is configured to distribute the detection devices according to a predetermined topology.

12. System according to one of claims 10 or 11, also comprising means for detecting a detection result originating from a detection device (10).

13. Method for distributing several detection devices (10) according to one of claims 1 to 7 and detecting a detection result originating from a detection device making it possible to locate the source of the signal of interest, the method comprising the implementation of a system according to one of claims 10 to 12 and comprising the steps of:
- distributing the detection devices (10) in a search zone according to a predetermined topology, and
- detecting at least one positive result of detection of the signal.

14. Method according to claim 13, also comprising a step of determining a distribution topology of the detection devices, the distributor being configured to distribute the detection devices according to the predetermined topology.
